# EUROPÄISCHE PATENTANMELDUNG

(11) **EP 3 094 027 A1**
(43) Veröffentlichungstag der Anmeldung: **16.11.2016**
(21) Anmeldenummer: 16166918.9
(22) Anmeldetag: 25.04.2016
(51) Int. Cl.: H04L 1/00, H04R 25/00, H04W 28/06

(54) **VERFAHREN ZUR ÜBERTRAGUNG DIGITALER DATENPAKETE VON EINEM SENDER ZU EINEM IN EINEM MOBILGERÄT ANGEORDNETEN EMPFÄNGER**

(30) Priorität: 13.05.2015 DE 102015208948
(71) Anmelder: Sivantos Pte. Ltd., Singapore 139959 (SG)
(72) Erfinder: ZHANG, Jie, 100095 Beijing (CN); LAMPE, Mattias, 38304 Wolfenbüttel (DE)
(74) Vertreter: FDST Patentanwälte

(57) **Zusammenfassung**

Die Erfindung nennt ein Verfahren zur Übertragung einer Vielzahl an digitalen Datenpaketen (20, 20a-c) von einem Sender (12) zu einem in einem Mobilgerät (2) angeordneten Empfänger (8), wobei jeweils eine Mehrzahl an Datenpaketen (20, 20a-c) zu einem Block (26a-c) zusammengefasst wird, wobei die Vielzahl an Datenpaketen (20, 20a-c) vom Sender (12) derart versendet werden, dass für eine Mehrzahl an aufeinanderfolgenden Blöcken (26a-c) die Zeitabstände (32, 32a-c) zwischen den einzelnen Datenpaketen (20, 20a-c) des jeweiligen Blocks (26a-c) über die Blöcke (26a-c) hinweg variieren, und/oder für eine Mehrzahl an aufeinanderfolgenden Blöcken (26a-c) die zeitliche Dauer (38a-c) der Blöcke (26a-c) variiert, und/oder für eine Anzahl an Blöcken (26a-c) die Zeitabstände (32, 32a-c) zwischen den einzelnen Datenpaketen (20, 20a-c) im Block (26a-c) variieren, und wobei die Blöcke (26a-c) an Datenpaketen (26) vom Empfänger (8) empfangen und dekodiert werden. Die Erfindung nennt weiter einen Sender (12), welcher dazu eingerichtet ist, eine Vielzahl an digitalen Datenpaketen (20, 20a-c) durch ein solches Verfahren zu einem Mobilgerät (2) zu übertragen, sowie ein Mobilgerät (2), umfassend einen Empfänger (8), welches dazu eingerichtet ist, eine Vielzahl an digitalen Datenpaketen (20, 20a-c), welche nach einem solchen Verfahren übertragen werden, zu empfangen und zu dekodieren.

## Beschreibung

Die Erfindung betrifft ein Verfahren zur Übertragung einer Vielzahl an digitalen Datenpaketen von einem Sender zu einem in einem Mobilgerät angeordneten Empfänger, wobei jeweils eine Mehrzahl an Datenpaketen zu einem Block zusammengefasst wird, und wobei Blöcke an Datenpaketen vom Empfänger empfangen und dekodiert werden.

Für Hörgeräte wurden bisher digitale drahtlose Verbindungen vorrangig dazu verwendet, Betriebsparameter des Hörgerätes, wie beispielsweise die Lautstärke, von einem Handgerät aus einstellen zu können. In jüngster Zeit werden digitale drahtlose Übertragungsprotokolle auch dazu verwendet, Audio-Daten von einer dafür eingerichteten Quelle, zum Beispiel einem Fernsehgerät oder einem Telefon, zum Hörgerät zu streamen. Hierbei weist die Quelle eine drahtbasierte Signalverbindung zu einem Sender auf, welcher ein digitales Funksignal aussendet, das von einem Hörgerät, welches mit einem entsprechenden Empfänger ausgerüstet ist, empfangen werden kann.

Hörgeräte haben hierbei oftmals zwei Arbeitsmodi: Im regulären Modus nimmt jeweils ein Mikrofon beziehungsweise Mikrofonsystem eines Hörgerätes akustische Signale aus der Umgebung auf, welche im Hörgerät verstärkt werden, und entsprechend mittels eines Lautsprechers an das Gehör des Benutzers wiedergegeben werden. Im Streaming-Modus wird ein digitales Funksignal, in welchem Audio-Daten kodiert sind, vom Empfänger empfangen, und die Audio-Daten durch den Lautsprecher wiedergegeben. Optional kann auch hierbei ein Handgerät zur Steuerung der Lautstärke oder zum Wechseln zwischen den Betriebsmodi etc. vorgesehen sein.

Aufgrund der Anforderungen an die Größe und die Lebensdauer einer Batterie in einem Hörgerät ergeben sich in einem Hörgerät erhebliche Einschränkungen. Ein Übertragungsprotokoll überträgt die Audio-Daten üblicherweise in zeitlich kurzen Datenpaketen mit einer vergleichsweise hohen Datenrate, wobei die digitalen Daten meist auf ein analoges Trägersignal einer bestimmten Frequenz aufmoduliert werden. Meist sind dabei von einem Übertragungsprotokoll mehrere Trägerfrequenzen vorgesehen, welche durch die entsprechende Modulation der digitalen Daten jeweils einen Übertragungskanal bilden. In einem Intervall zwischen zwei Datenpaketen wird vom Sender in keinem der Übertragungskanäle das Trägersignal moduliert. In diesem Zeitraum kann im Empfänger des Hörgerätes die Leistungsversorgung auf ein Minimum für einen Stand-by-Betrieb reduziert werden, um Energie zu sparen.

Da für eine stabile Wiedergabe der übertragenen Audio-Daten diese Ruhezeit durch eine entsprechend höhere Datenrate bei der Übertragung der Datenpakete zu kompensieren ist, und andererseits die empfangenen Audio-Daten der Datenpakete in einem Speicher zwischengespeichert werden und für die Wiedergabe aus diesem ausgelesen werden, beträgt die Dauer einer Ruhezeit zwischen zwei Datenpaketen in einem Übertragungsprotokoll üblicherweise nur wenige Millisekunden, um unter anderem Zeitverzögerungen beim Auslesen des Speichers möglichst klein halten zu können. Die Betriebsspannung von Batterien, welche in üblichen Hörgeräten Anwendung finden, liegt meist in einer Größenordnung von 1,5 Volt. Für jene Anwendungen in einem Hörgerät, welche eine höhere Spannung erfordern, wird die Betriebsspannung der Batterie angehoben, beispielsweise über einen Aufwärts-Spannungswandler (Hochsetzsteller). Der Regelung für die Stabilität der Spannung sind aus Gründen der Effizienz, u.a. durch die Kapazität der zur Glättung verwendeten Kondensatoren, Grenzen gesetzt.

Diese Einschränkungen bei der Spannungs- bzw. Leistungsversorgung können im Betrieb der Signal-Empfangseinheit zu folgendem Problem führen: Während des Empfangs eines Datenpaketes zieht der Empfänger einen vergleichsweise hohen Strom, welcher bis zu einigen Milliampere betragen kann. Während der Ruhezeiten, in welchen keine Datenpakete übertragen werden, ist der Verbrauch des Empfängers deutlich niedriger. Die Regelung der Stabilität der Spannung ist üblicherweise nicht dafür ausgelegt, bei derartigen Schwankungen im Stromverbrauch die von der Batterie bereitgestellte Spannung vollständig konstant zu halten. Der periodische Leistungsbetrieb des Empfängers und weiterer Signal-Verarbeitungseinheiten, welche mit diesem verbunden sind, führt hierdurch zu periodischen Veränderungen in der Betriebsspannung.

Da die analogen Schaltungen für die Signalverarbeitung im Hörgerät, wie zum Beispiel die Verstärkung oder Vorverstärkung, über diese Betriebsspannung betrieben werden, und die periodischen Schwankungen in der Betriebsspannung durch den Empfang von Datenpaketen im Empfänger hervorgerufen werden, wobei je nach Übertragungsprotokoll 100 bis einige 1000 Datenpakete pro Sekunde empfangen werden, können diese Schwankungen in der Betriebsspannung hörbare Artefakte im wiedergegebenen Schallsignal des Hörgerätes erzeugen.

Der Erfindung liegt daher die Aufgabe zugrunde, ein Verfahren zur Übertragung digitaler Datenpakete von einem Sender zu einem in einem Mobilgerät angeordneten Empfänger anzugeben, welches bei niedrigem Energieverbrauch möglichst geringe Auswirkungen auf die Stabilität der Betriebsspannung des Mobilgeräts hat.

Die genannte Aufgabe wird erfindungsgemäß gelöst durch ein Verfahren zur Übertragung einer Vielzahl an digitalen Datenpaketen von einem Sender zu einem in einem Mobilgerät angeordneten Empfänger, wobei jeweils eine Mehrzahl an Datenpaketen zu einem Block zusammengefasst wird, wobei die Vielzahl an Datenpaketen vom Sender derart versendet werden, dass in deterministischer Weise für eine Mehrzahl an aufeinanderfolgenden Blöcken die Zeitabstände zwischen den einzelnen Datenpaketen des jeweiligen Blocks über die Blöcke hinweg variieren, und/oder für eine Mehrzahl an aufeinanderfolgenden Blöcken die zeitliche Dauer der Blöcke variiert, und/oder für eine Anzahl an Blöcken die Zeitabstände zwischen den einzelnen Datenpaketen im Block variieren, und wobei die Blöcke an Datenpaketen vom Empfänger empfangen und dekodiert werden. Vorteilhafte und teils für sich gesehen erfinderische Ausgestaltungen sind Gegenstand der Unteransprüche und der nachfolgenden Beschreibung.

Insbesondere ist darunter, dass für eine Mehrzahl an aufeinanderfolgenden Blöcken die Zeitabstände zwischen den einzelnen Datenpaketen des jeweiligen Blocks über die Blöcke hinweg variieren, zu verstehen, dass in jedem einzelnen der betrachteten aufeinanderfolgenden Blöcke die einzelnen Zeitabstände zwischen den Datenpaketen des Blocks einen konstanten Wert aufweisen, welcher über die betrachteten, aufeinanderfolgenden Blöcke hinweg variiert. Zur Definition des zeitlichen Abstands zweier aufeinanderfolgender Datenpakete kann dabei insbesondere das zeitliche Intervall vom Endzeitpunkt eines Datenpakets bis zum Startzeitpunkt des nachfolgenden Datenpakets herangezogen werden. Die beiden genannten Zeitpunkte sowie ein Datenpaket als solches können dabei über eine Sendeaktivität des Senders definiert werden, beispielsweise über eine in einem Übertragungskanal vorhandene Sendeleistung. Die zeitliche Dauer eines Blocks ist insbesondere über den Abstand des Startzeitpunkts des ersten Datenpakets des Blocks zum Startzeitpunkt des ersten Datenpakets des nachfolgenden Blocks zu definieren.

Unter einem Empfang und einer Dekodierung der Blöcke an Datenpaketen durch den Empfänger ist hierbei auch die Möglichkeit umfasst, dass aufgrund von Übertragungsverlusten nicht alle Datenpakete eines Blocks vollständig empfangen werden. Das Dekodieren umfasst hierbei das Auslesen der in einem Datenpaket zur Weiterverarbeitung vorgesehenen Daten, das Entfernen von protokollspezifischen Informationen in einer Präambel eines Datenpakets aus den für die Weiterverarbeitung vorgesehenen Daten, die nur einmalige Berücksichtigung redundanter Daten in mehreren Datenpaketen eines Blocks für die Weiterverarbeitung, und generell das Bereitstellen der durch die Datenpakete eines Blocks kodierten Nutzinformation. Unter einer Variation der Zeitabstände zwischen Datenpaketen bzw. der Dauern der Blöcke ist insbesondere umfasst, dass in einer Mehrzahl an betrachteten Zeitabständen bzw. Dauern der Blöcke wenigstens ein Wert von den anderen um mehr als einen Toleranzbetrag abweicht.

Ausgangspunkt der Erfindung ist die Übertragung der digitalen Daten in zeitlich abgegrenzten Datenpaketen mit jeweils hoher Datenrate. Die Vorteile, welche sich für den Energieverbrauch des Mobilgeräts während der sende- und somit auch empfangsfreien Zeiten ergeben, bleiben hierdurch ebenso erhalten, wie die umfangreichen Möglichkeiten zur Korrektur von Übertragungsfehlern einzelner Bitwerte durch entsprechend dafür vorgesehene Redundanzen in den Datenpaketen bzw. eigene Redundanz-Datenpakete. Der Empfang eines einzelnen Datenpaketes kann im Mobilgerät zu einer Schwankung der Betriebsspannung führen, welche über dies umso größer ausfallen kann, je höher die Datenrate des Datenpakets ist, also je mehr unterschiedliche Signal-Zeichen pro Zeiteinheit beim Empfang aufzulösen sind. Eine diesbezüglich zunächst denkbare zeitkontinuierliche Übertragung der Daten, oder ein Absenken der Datenrate der Datenpakete bei zeitlicher Verlängerung der einzelnen Datenpakete, was zu einer Verringerung der sendefreien Zeit führen würde, wird aus den oben genannten Überlegungen verworfen.

Die Erfindung erkennt nun, dass Störungen in der analogen Signalverarbeitung des Mobilgeräts, welche durch die Schwankungen der Betriebsspannung hervorgerufen werden, überhaupt erst durch die hohe Regelmäßigkeit der die Störungen bedingenden Empfänger-Aktivität bedeutsam werden. Ist beispielsweise im Mobilgerät eine Weiterverarbeitung der empfangenen Datenpakete zu einem Audio-Signal vorgesehen, so führen Störungen in der analogen Signalverarbeitung des Mobilgeräts, welche durch die Schwankungen der Betriebsspannung hervorgerufen werden, im auszugebenden Audio-Signal erst aufgrund der hohen Regelmä-βigkeit der empfangenen Datenpakete zu Störgeräuschen mit wohldefinierten Frequenzen im Audio-Signal, welche hörbar wahrgenommen werden können.

Die Erfindung tritt dem entgegen, indem die strenge Periodizität beim Senden und Empfangen der einzelnen Datenpakte durchbrochen wird. Dies führt dazu, dass die Spannungsschwankungen beim Empfang der Datenpakete sich nicht mit einer fest vorgegebenen Frequenz wiederholen, und in der analogen Signalverarbeitung zu einem Störsignal der entsprechenden Frequenz führen, sondern mögliche Störsignale durch eine Frequenzmodulation des Empfangs der Datenpakete über einen breiteren Frequenzbereich gespreizt werden. Während dabei die Anzahl der zu versendenden Datenpakete über eine Mehrzahl von aufeinanderfolgenden Blöcken üblicherweise durch ein entsprechendes Protokoll für die Weiterverarbeitung der empfangenen Datenpakete vorgegeben ist, und hierdurch eine Grundfrequenz für den Empfang der Datenpakete definiert ist, kann dieser Grundfrequenz durch eine Variation der Zeitabstände zwischen einzelnen Datenpaketen zu einer solchen Glättung ein entsprechendes Signal aufmoduliert werden. Die Zeitabstände können hierfür in einer pseudo-zufälligen, quasi-chaotischen Weise variiert werden, oder ein bewusst gewähltes Modulationssignal nachbilden.

Eine Variation der Zeitabstände zwischen den einzelnen Datenpaketen kann dabei zum einen dadurch erreicht werden, dass innerhalb eines jeden Blocks die Zeitabstände zwischen den einzelnen Datenpaketen bis zum jeweils letzten Datenpaket des Blocks jeweils einen konstanten Wert aufweisen, wobei für verschiedene, aufeinander folgende Blöcke dieser Wert jedoch variiert. Insbesondere ist hierbei die sendefreie Ruhezeit vom letzten Datenpaket eines Blocks bis zum ersten Datenpaket eines nachfolgenden Blocks für die Berechnung der Zeitabstände nicht heranzuziehen. Zum anderen kann für eine Mehrzahl an aufeinanderfolgenden Blöcken die zeitliche Dauer der Blöcke variiert werden, wodurch selbst im Fall jeweils gleicher Zeitabstände zwischen den einzelnen Datenpaketen für die beteiligten Blöcke über diese hinweg die Periodizität der Datenpakete durchbrochen wird. Des Weiteren können in einem Block die Zeitabstände zwischen den Datenpaketen auch direkt variiert werden.

Der Sender und der Empfänger sind hierbei jeweils mit entsprechenden Informationen über die zeitliche Abfolge der Datenpakete, und somit über die einzelnen zu erwartenden Zeitabstände auszurüsten. Ein derartiges Vorgehen hat überdies insbesondere den Vorteil, dass bei einer fehlerhaften oder unvollständigen Übertragung eines Datenpakets aufgrund von Störungen in einem verwendeten Übertragungskanal infolge der vordefinierten Zeitabstände negative Auswirkungen für den Empfang nachfolgender Datenpakete vermieden werden können.

Bevorzugt wird im Mobilgerät aus vom Empfänger empfangenen Datenpaketen ein zeitkontinuierliches Wiedergabesignal erzeugt. Insbesondere kann hierbei vorgesehen sein, dass eine Anzahl an Datenpaketen in einem Block eine Redundanz-Information trägt, sodass ein zeitkontinuierliches Wiedergabesignal im Mobilgerät auch dann noch erzeugt werden kann, wenn nicht alle Datenpakete eines Blocks vollständig und fehlerfrei empfangen werden. Für die Erzeugung eines zeitkontinuierlichen Wiedergabesignals, insbesondere eines Audio-Signals, ist eine möglichst stabile Betriebsspannung im Mobilgerät besonders wünschenswert, um Auswirkungen von möglichen Schwankungen der Betriebsspannung auf eine Signalverarbeitung des Wiedergabesignals zu minimieren. Das vorgeschlagene Verfahren trägt hierbei in besonderem Maße dazu bei, dass Schwankungen in der Betriebsspannung nur unmerklich wahrnehmbare Auswirkungen haben.

Zweckmäßigerweise versendet der Sender einzelne Datenpakete, in den jeweils die digitale Information eines Datenpakets in ein analoges Trägersignal einer fest vorgegebenen Frequenz kodiert wird. Insbesondere kann dies mittels einer Phasenmodulation oder einer Frequenzmodulation des Trägersignals erfolgen. Eine derartige Kodierung wird in der Praxis besonders häufig verwendet, wobei im Empfänger des Mobilgeräts gerade bei vergleichsweise hohen Datenraten infolge der dort durchzuführenden Demodulierung der auf das analoge Trägersignal modulierten Information vorübergehend ein hoher Energieverbrauch anfällt. Dieser kann die Stabilität der Betriebsspannung im Mobilgerät beeinträchtigen, wobei eine Übertragung der Datenpakete mittels des vorgeschlagenen Verfahrens im Mobilgerät die Ausbildung eines periodischen Störsignals durch die besagten Schwankungen der Betriebsspannung beim Empfang der Datenpakete unterbinden kann.

Als weiter vorteilhaft erweist es sich hierbei, wenn für die Vielzahl an Datenpaketen vom Sender die Frequenzen der jeweiligen analogen Trägersignale variiert werden, und dabei der Empfänger gespeicherte Informationen zur Abfolge der Frequenzen der analogen Trägersignale für die Zeitabstände aufeinanderfolgender Datenpakete heranzieht. Die Frequenzen der analogen Trägersignale werden hierbei vom Sender nach einem vorgegebenen Muster variiert, sodass durch jede der verwendeten Frequenzen und gegebenenfalls eine die Frequenz für eine Modulation umgebende Bandbreite ein Frequenzband-Kanal gebildet wird.

Die Variation der Frequenzen der analogen Trägersignale für die Übertragung unterschiedlicher Datenpakete bedeutet also, dass einzelne Datenpakete auf verschiedenen Frequenzband-Kanälen übertragen werden. Dieses sogenannte Frequency-Hopping ist ein in der Praxis häufig angewandtes Verfahren bei der Übertragung von Datenpaketen, um insbesondere Datenverluste, welche durch mögliche Störungen in einem Frequenzband-Kanal auftreten können, durch die Aufteilung der Übertragung der Datenpakete auf mehrere Frequenzband-Kanäle in Verbindung mit dem Versenden von Redundanz-Datenpaketen minimieren zu können. Hierfür wird sowohl beim Sender als auch beim Empfänger vorab eine durch das jeweilige Übertragungsprotokoll bestimmte Liste mit der Abfolge der für jedes zu versendende Datenpaket zu verwendenden Frequenz-Kanäle hinterlegt.

Diese beim Frequency-Hopping ohnehin vorhandene Information kann nun mit verhältnismäßig geringem Speicheraufwand um Informationen über die jeweiligen Zeitabstände zum jeweils nachfolgenden Datenpaket ergänzt werden. Ein derartiges Vorgehen hat überdies insbesondere den Vorteil, dass bei einer fehlerhaften oder unvollständigen Übertragung eines Datenpakets aufgrund von Störungen im betreffenden Frequenzband-Kanal infolge der vordefinierten Zeitabstände für den Empfänger a priori keine Auswirkungen für den Empfang nachfolgender Datenpakete zu befürchten sind.

Günstigerweise wird vom Sender in den Datenpaketen an deren Beginn jeweils eine Information über den Startzeitpunkt des jeweils nachfolgenden Datenpakets eingefügt. Eine derartige Information kann die Stabilität des Übertragungsprotokolls zusätzlich erhöhen, um beispielsweise Fehler beim Auslesen einer gespeicherten Information über die Abfolge und Zeitabstände der Datenpakete auf Seiten des Empfängers kompensieren zu können.

Bevorzugt bleibt die zeitliche Dauer der Datenpakete beim Versenden im Wesentlichen gleich. Insbesondere ist hierunter zu verstehen, dass das Zeitintervall, für welches der Sender zur Übertragung eines Datenpakets in einen Übertragungskanal eine Sendeleistung ausgibt, für die Datenpakete bis auf technisch bedingte Schwankungen gleichbleibt. Hierdurch lassen sich die Zeitabstände zwischen den einzelnen Datenpaketen leichter bestimmen.

Die Erfindung nennt weiter einen Sender, welcher dazu eingerichtet ist, eine Vielzahl an digitalen Datenpaketen durch das vorbeschriebene Verfahren zu einem Mobilgerät zu übertragen, sowie ein Mobilgerät, umfassend einen Empfänger, welches dazu eingerichtet ist, eine Vielzahl an digitalen Datenpaketen, die nach dem vorbeschriebenen Verfahren übertragen werden, zu empfangen und zu dekodieren. Die für das Verfahren und seine Weiterbildungen angegebenen Vorteile können hierbei sinngemäß auf den Sender und auf das Mobilgerät übertragen werden.

In einer vorteilhaften Ausgestaltung ist das Mobilgerät als ein Hörgerät, insbesondere eine Hörhilfegerät, mit einem Lautsprecher ausgebildet, welches dazu eingerichtet ist, aus der empfangenen und dekodierten Vielzahl an Datenpaketen ein Audio-Wiedergabesignal zu erzeugen und dieses über den Lautsprecher wiederzugeben. Aufgrund der Einschränkungen an die Dimensionen und die Batterieleistung eines Hörgeräts ist für ein solches die Übertragung von digitalen Datenpaketen nach dem vorbeschriebenen Verfahren hinsichtlich der Stabilität der Betriebsspannung und damit der Qualität des über den Lautsprecher wiedergegebenen Audio-Wiedergabesignals besonders vorteilhaft.

Nachfolgend wird ein Ausführungsbeispiel der Erfindung anhand einer Zeichnung näher erläutert. Hierbei zeigen jeweils schematisch:
- Fig. 1: einen Sender, welcher an ein Hörhilfegerät ein digitales Signal zur Wiedergabe von Audio-Daten überträgt,
- Fig. 2: den zeitlichen Verlauf des Signals nach Fig. 1 bei einer Übertragung nach Stand der Technik,
- Fig. 3: den zeitlichen Verlauf des Signals bei einer Variation der Zeitabstände der Datenpakete für den jeweiligen Block über mehrere Blöcke hinweg,
- Fig. 4: den zeitlichen Verlauf des Signals bei einer Variation der Dauer der einzelnen Blöcke,
- Fig. 5: den zeitlichen Verlauf des Signals bei einer Variation der Zeitabstände der Datenpakete in den einzelnen Blöcken,
- Fig. 6: den zeitlichen Verlauf des Signals bei einer Kombination der Variationen nach Fig. 3, Fig. 4 und Fig. 5, und
- Fig. 7: den zeitlichen Verlauf des Signals mit variablen Zeitabständen der Datenpakete bei einer Aufteilung der Übertragung auf mehrere Frequenzband-Kanäle.

Einander entsprechende Teile und Größen sind in allen Figuren jeweils mit gleichen Bezugszeichen versehen.

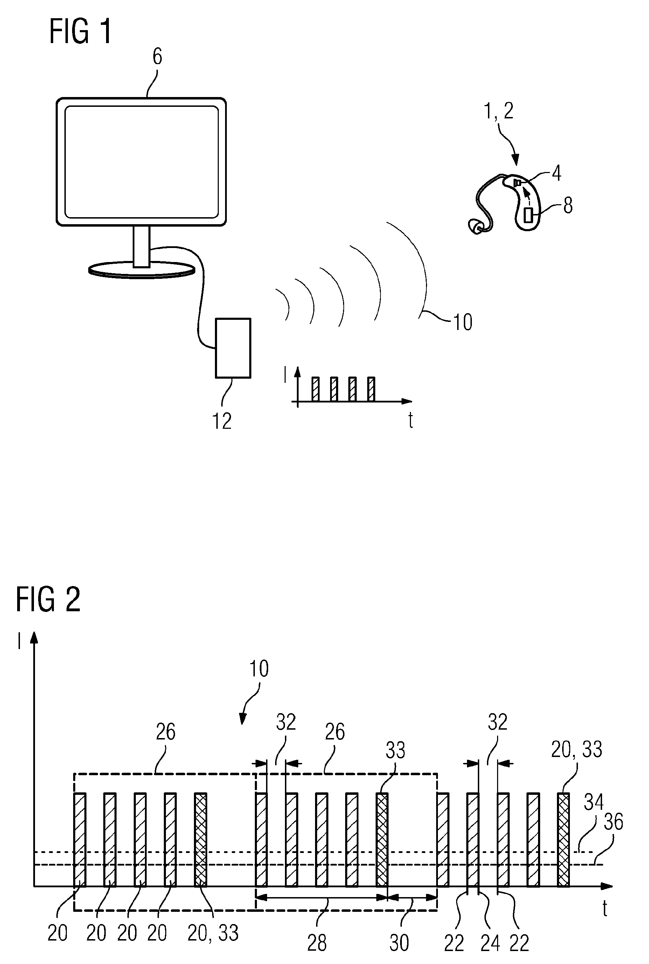

In Fig. 1 ist schematisch ein als ein Hörhilfegerät 1 ausgebildetes Mobilgerät 2 dargestellt. Das Hörhilfegerät 1 ist dazu eingerichtet, mittels eines nicht näher dargestellten Mikrofons Schall aus der Umgebung aufzuzeichnen, zur Korrektur einer Hörschädigung eines Benutzers des Hörhilfegeräts 1 zu verstärken, und über einen Lautsprecher 4 an ein Ohr des Benutzers wiederzugeben.

Um bei der Verwendung von Unterhaltungselektronik, wie sie beispielsweise durch ein Fernsehgerät 6 gegeben sein kann, dem Benutzer eine bessere Klangqualität zu ermöglichen, als durch die oben beschriebene akustische Aufnahme und Wiedergabe des von den Lautsprechern des Fernsehgeräts 6 erzeugten Schalls möglich wäre, ist das Hörhilfegerät 1 mit einem Empfänger 8 ausgerüstet, welche dazu eingerichtet ist, ein digitales Signal 10 zu empfangen, welches von einem mit dem Fernsehgerät 6 verbundenen Sender 12 versendet wird. Der Empfänger 8 kann dabei beispielsweise eine Antenne und einen Decoder aufweisen, welcher von der Antenne empfangene Signale für eine weitere audio-spezifische Signalverarbeitung im Hörhilfegerät 1 dekodiert und entsprechend aufbereitet.

Im digitalen Signal 10 ist dabei die jeweils aktuelle Tonspur des Fernsehgeräts 6 kodiert. Das Hörhilfegerät 1 kann also über den Empfänger 8 die Tonspur digital empfangen, so dass Klangverluste beim akustischen Übertragungsweg von den Lautsprechern des Fernsehgerätes 6 über die Umgebung zum Mikrofon des Hörhilfegeräts 1 vermieden werden können.

In Fig. 2 ist der zeitliche Verlauf des digitalen Signals 10 nach Fig. 1 dargestellt, welches vom Sender 12 gemäß Stand der Technik versendet wird. Gegen eine Zeitachse t ist hierbei die momentane Datenmenge I in allen Übertragungskanälen aufgetragen. Im digitalen Signal 10 werden die Informationen in Datenpaketen 20 übertragen. Ein einzelnes Datenpaket 20 stellt hierbei eine zeitlich abgeschlossene Einheit dar. Vom Startzeitpunkt 22 an bis zum Endzeitpunkt 24 eines einzelnen Datenpaketes 20 wird hierfür in einem bestimmten Übertragungskanal, welcher beispielsweise durch eine Trägerfrequenz bestimmt sein kann, kontinuierlich das Signal entsprechend der zu übertragenden Bitwerte moduliert. Zwischen verschiedenen Datenpaketen 20 findet keine Informationsübertragung statt, d.h., wenn vom Sender überhaupt eine Sendeleistung ausgeht, geht diese in eine unmodulierte Trägerfrequenz.

Die Datenpakete 20 werden jeweils zu zusammenhängenden Blöcken 26 ("Frames") zusammengefasst. In jedem Block 26 werden hierbei in einer Sendezeit 28 alle Datenpakete 20 des jeweiligen Blocks 26 versendet. Nach Abschluss des letzten Datenpakets 20 beginnt eine Ruhezeit 30 bis zum Beginn des nächsten Blocks 26, in welcher keine weiteren Datenpakete versendet werden. Die Ruhezeit 30 dauert dabei länger als der zeitliche Abstand 32 zweier aufeinanderfolgender Datenpakete 20. Die in den Datenpaketen 20 eines Blockes 26 kodierte Information ist hierbei teilweise redundant, um bei einem Übertragungsfehler eines Datenpakets 20 dennoch eine Wiedergabe zu ermöglichen. Dies kann beispielsweise durch einzelne, hierfür vorgesehene Redundanz-Pakete 33 erfolgen. Ein einzelner Block 26 stellt dabei die kleinste im Übertragungs-Protokoll vorgesehene Einheit dar, welche nach einem Dekodieren wiedergegeben werden kann. Die mittlere Datenrate 34 des Senders bezieht sich auf die über mehrere Blöcke 26 gemittelte Menge an real versendeter Daten. Die mittlere Datenmenge 36 als die über mehrere Blöcke 26 gemittelte Menge an übertragener Information ist infolge der Redundanzen geringer als die mittlere Datenrate 34. Abzüglich von Informationen, welche Anweisungen für das Protokoll betreffen, und üblicherweise in einer Präambel eines jeden Datenpakets 20 gespeichert sind, entspricht die mittlere Datenmenge 36 im Idealfall der Sample-Rate bei der Wiedergabe.

Aufgrund der innerhalb der einzelnen Blöcke 26 jeweils gleichen Zeitabstände 32 zwischen den jeweiligen Datenpaketen 20 sowie aufgrund der über die Blöcke hinweg jeweils identischen Sendezeiten 28 und Ruhezeiten 30 bleibt das zeitliche Muster, welches durch die Abfolge des Sendens der Datenpakete 20 über die Blöcke 32 hinweg gebildet wird, gleich. Im Empfänger 8 des Hörhilfegeräts 1 führt jedoch der Empfang der Datenpakete 20 zu Schwankungen in der Betriebsspannung, welche dieses zeitliche Muster weitgehend nachbilden. Diese Spannungsschwankungen haben auch Auswirkungen auf die analoge Signalverarbeitung im Hörhilfegerät.

Infolge der Regelmäßigkeiten in den Zeitabständen 32 zwischen den Datenpaketen 20 sowie in den Sendezeiten 28 und Ruhezeiten 30 wird durch die genannten Spannungsschwankungen einem Nutzsignal in der analogen Signalverarbeitung die den inversen Zeitabständen 32 entsprechende Frequenz als Störgeräusch aufmoduliert. Da üblicherweise die Übertragungsprotokolle Zeitabstände in der Größenordnung von Millisekunden, insbesondere zwischen 0.1 ms und 10 ms, vorsehen, sind solche Störgeräusche aufgrund der entsprechenden Frequenzen (im Bereich von 100 Hz bis 10 kHz) für einen Benutzer des Hörhilfegeräts 1 hörbar. Um derartige Störgeräusche in der analogen Signalverarbeitung zu unterdrücken, kann nun die zeitliche Abfolge der Datenpakete 20 beim Versenden wie nachfolgend dargestellt variiert werden.

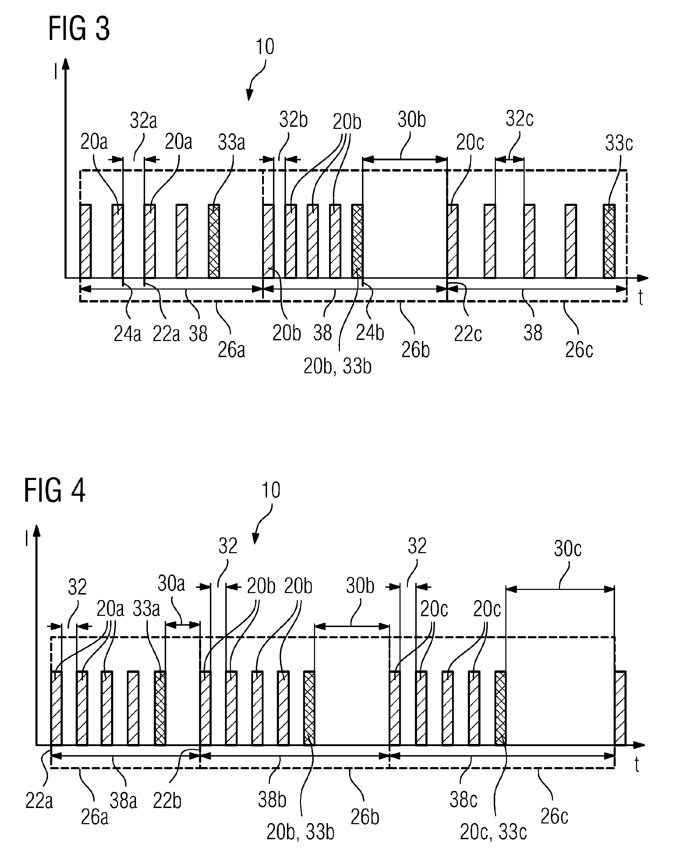

In Figur 3, Figur 4, Figur 5 und Figur 6 ist jeweils der Verlauf des digitalen Signals 10 durch eine Auftragung der momentanen Datenmenge I in allen Übertragungskanälen gegen eine zweite Achse t dargestellt. In Figur 3 ist die Dauer 38 für die einzelnen Blöcke 26a, 26b, 26c jeweils gleich, wobei die Zeitabstände 32a, 32b, 32c zwischen den einzelnen Datenpaketen 20 der jeweiligen Blöcke 26a, 26b, 26c jeweils blockweise konstant sind, aber für unterschiedliche Blöcke 26a, 26b, 26c jeweils unterschiedliche Werte aufweisen. Der Abstand 32a zweier Datenpakete 20a ist hierbei jeweils zu definieren als die Zeit zwischen einem Endzeitpunkt 24a eines Datenpakets 20a bis zum Startzeitpunkt 22a des nachfolgenden Datenpakets 20a. Zur Definition der Zeitabstände 32a, 32b, 32c werden hierbei nur die Zeitabstände bis zum jeweils letzten Datenpaket 33a, 33b, 33c des jeweiligen Blockes 26a, 26b, 26c herangezogen. Das zeitliche Intervall von einem Endzeitpunkt 24b des letzten Datenpaketes 33b eines Blocks 26b bis zum Startzeitpunkt 22c eines ersten Datenpakets 20c des nachfolgenden Blocks 26c, welcher gleichzeitig den Startzeitpunkt des Blocks 26c markiert, gilt definitionsgemäß nicht als Zeitabstand 32b innerhalb des Blocks 26b, sondern als Ruhezeit 30b, in welcher die Übertragung aller Datenpakete 20b, 33b des Blocks 26b bereits abgeschlossen ist.

Der in Figur 4 dargestellte zeitliche Verlauf des digitalen Signals 10 zeigt einzelne Blöcke 26a, 26b, 26c von Datenpaketen 20a, 20b, 20c, wobei die Blöcke 26a, 26b, 26c jeweils eine unterschiedliche Dauer 38a, 38b, 38c aufweisen. Die Dauer 38a eines Blocks 26a ist hierbei definiert als die Zeit zwischen dem Startzeitpunkt 22a des ersten Datenpakets 20a des Blocks 26a bis zum Startzeitpunkt 22b des ersten Datenpakets 20b des nachfolgenden Blocks 26b. Die Zeitabstände 32 zwischen je zwei Datenpaketen 20a beziehungsweise 20b beziehungsweise 20c sind für alle Blöcke 26a, 26b, 26c gleich. Die Variation der Dauern 38a, 38b, 38c der Blöcke 26a, 26b, 26c wird erreicht durch jeweils unterschiedliche Ruhezeiten 30a, 30b, 30c, also jeweils unterschiedliche lange sendefreie Zeit nach dem jeweils letzten Datenpaket 33a, 33b, 33c im Block 26a, beziehungsweise 26b, beziehungsweise 26c bis zum Beginn des nächsten Blocks.

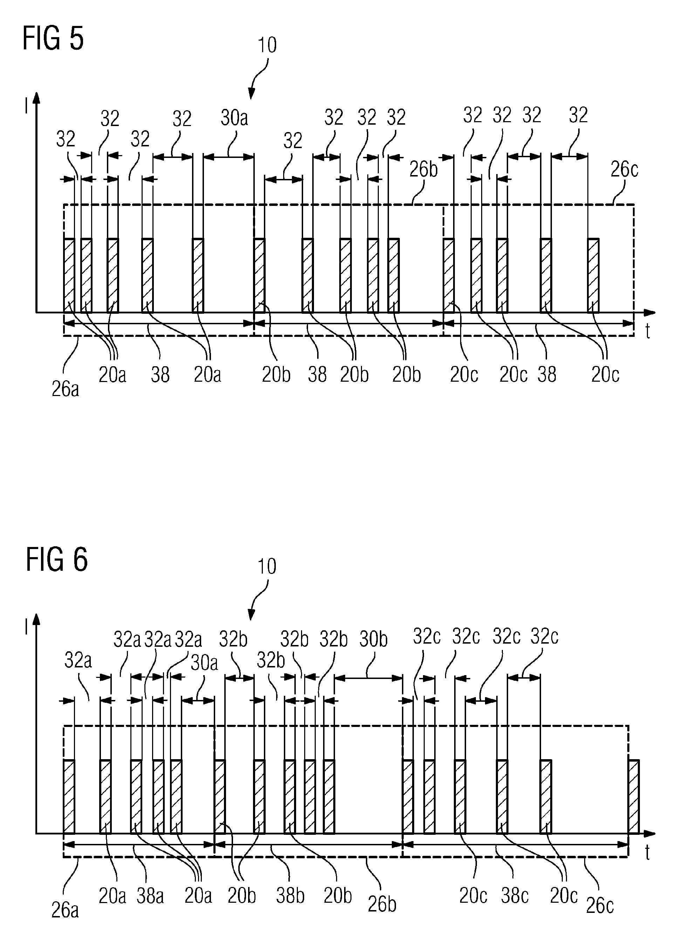

In Figur 5 ist der zeitliche Verlauf des digitalen Signals 10 dargestellt, in welchem die einzelnen Blöcke 26a, 26b, 26c jeweils die gleiche Dauer 38 aufweisen, allerdings die Zeitabstände 32 zwischen einzelnen Datenpaketen 20 eines jeweiligen Blocks 26a, beziehungsweise 26b, beziehungsweise 26c variieren. In der hier gezeigten Version nehmen dabei die Zeitabstände 32 zwischen den Datenpaketen 20a eines ersten Blocks 26a kontinuierlich zu, während die Zeitabstände 32 zwischen den einzelnen Datenpaketen 20b des nachfolgenden Blocks 26b kontinuierlich abnehmen. Über die Zeitabstände 32 im ersten Block 26a, die Ruhezeit 30a im ersten Block 26a, und die Zeitabstände 32 im zweiten Block 26b kann hierbei durch das zeitliche Muster der Datenpakete 20a, 20b der Blöcke 26a, 26b die Modulation eines diskretisierten Sinus-Halbwellenzuges nachgebildet werden. Der Block 26c zeigt eine weitere Möglichkeit, die Zeitabstände 32 zwischen den einzelnen Datenpaketen 20c innerhalb des Blocks 26c zu variieren. Der erste und der zweite Zeitabstand 32 beziehungsweise der dritte und der vierte Zeitabstand 32 zwischen den einzelnen Datenpaketen 20c sind jeweils untereinander gleich.

In Figur 6 ist der zeitliche Verlauf eines digitalen Signals 10 dargestellt, welches die in Figur 3, Figur 4 und Figur 5 gezeigten Variationen der Zeitabstände zwischen Datenpaketen sowie der unterschiedlichen Dauern 38a, 38b, 38c der einzelnen Blöcke 26a, 26b, 26c kombiniert. Im vorliegenden Fall nehmen die Zeitabstände 32a zwischen den Datenpaketen 20a des ersten Blocks 26a kontinuierlich ab. Dasselbe zeitliche Muster zeigt sich bei den Zeitabständen 32b zwischen den Datenpaketen 20b des zweiten Blocks 26b. Infolge einer verglichen mit der Ruhezeit 30a des ersten Blocks 26a längeren Ruhezeit 30b des zweiten Blocks 26b weist dieser gegenüber dem ersten Block 26a eine längere Dauer 38b auf. Demgegenüber nehmen im dritten Block 26c die Zeitabstände 32c zwischen den Datenpaketen 20c kontinuierlich zu, wobei der Block 26c auch eine längere Dauer 38c als die beiden vorangehenden Blöcke 26a, 26b aufweist. Weitere Kombinationsmöglichkeiten der hier dargestellten Variationen von Zeitabständen zwischen Datenpaketen und Dauern der Blöcke sind denkbar.

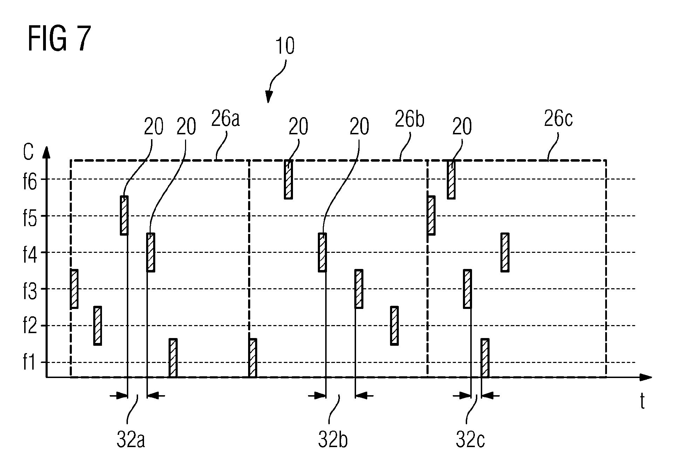

In Figur 7 ist der zeitliche Verlauf des digitalen Signals 10 bei einer Aufteilung der Übertragung der Datenpakete 20 auf mehrere Frequenzband-Kanäle gezeigt. Im hier dargestellten Fall wird für jedes Datenpaket 20 eines Blocks 26a, 26b, 26c jeweils ein neuer Frequenzband-Kanal C verwendet. Ein solcher Frequenzband-Kanal C ist hierbei jeweils definiert durch die Frequenz f1-f6 eines Trägersignals, sowie einer gewissen, für die Modulation der Bits des digitalen Signals 10 auf das Trägersignal vorgesehenen Bandbreite. Die Zeitabstände 32a, 32b, 32c zwischen Datenpaketen 20 sind jeweils innerhalb eines Blocks 26a, beziehungsweise 26b, beziehungsweise 26c konstant, variieren jedoch über die einzelnen Blöcke 26a, 26b, 26c hinweg.

Die Abfolge der einzelnen Frequenzband-Kanäle C zur Übertragung der Datenpakete 20 ist im Sender und im Empfänger anhand einer entsprechenden Tabelle vordefiniert. Diese bereits vorliegenden Informationen können nun um zusätzliche Zeitdifferenzen ergänzt werden, und im Sender und im Empfänger auch für den Zeitabstand 32a, 32b, 32c zum jeweils nachfolgenden Datenpaket 20 herangezogen werden. Durch dieses Ausnutzen von ohnehin im Protokoll verwendeten Informationen für die Ermittlung der Zeitabstände 32a, 32b, 32c kann insbesondere auf der Seite des Empfängers der Speicher- und Software-Aufwand zur Variation der Zeitabstände 32a, 32b, 32c verringert werden, wodurch sich das Verfahren zur Übertragung vereinfacht. Je nach Übertragungsprotokoll kann zudem in einer Präambel eines Datenpakets 20 eine Information bezüglich des Frequenzband-Kanals C enthalten sein, in welchem das jeweils nachfolgende Datenpaket 20 übertragen wird. Auch in diesem Fall kann die Präambel des Datenpakets um eine Information bzgl. des Zeitabstands zum nächsten Datenpaket 20 ergänzt werden. Eine solche Information kann auch unabhängig von Informationen zum Frequenzband-Kanal C geführt werden.

Obwohl die Erfindung im Detail durch das bevorzugte Ausführungsbeispiel näher illustriert und beschrieben wurde, ist die Erfindung nicht durch dieses Ausführungsbeispiel eingeschränkt. Andere Variationen können vom Fachmann hieraus abgeleitet werden, ohne den Schutzumfang der Erfindung zu verlassen.

### Bezugszeichenliste

- 1: Hörhilfegerät
- 2: Mobilgerät
- 4: Lautsprecher
- 6: Fernsehgerät
- 8: Empfänger
- 10: digitales Signal
- 12: Sender
- 20, 20a-c: Datenpaket
- 22, 22a-c: Startzeitpunkt
- 24, 24a-c: Endzeitpunkt
- 26, 26a-c: Block
- 28, 28a-c: Sendezeit
- 30, 30a-c: Ruhezeit
- 32, 32a-c: Abstand zweier Datenpakete
- 33, 33a-c: Redundanz-Paket
- 34: mittlere Datenrate
- 36: mittlere Datenmenge
- 38, 38a-c: Dauer eines Blocks

- C: Frequenzband-Kanal
- f1-f6: Frequenz des Trägersignals
- l: Datenmenge
- t: Zeitachse

## Patentansprüche

1. Verfahren zur Übertragung einer Vielzahl an digitalen Datenpaketen (20, 20a-c) von einem Sender (12) zu einem in einem Mobilgerät (2) angeordneten Empfänger (8),
wobei jeweils eine Mehrzahl an Datenpaketen (20, 20a-c) zu einem Block (26a-c) zusammengefasst wird,
wobei die Vielzahl an Datenpaketen (20, 20a-c) vom Sender (12) derart versendet werden, dass in deterministischer Weise
- für eine Mehrzahl an aufeinanderfolgenden Blöcken (26a-c) die Zeitabstände (32, 32a-c) zwischen den einzelnen Datenpaketen (20, 20a-c) des jeweiligen Blocks (26a-c) über die Blöcke (26a-c) hinweg variieren, und/oder
- für eine Mehrzahl an aufeinanderfolgenden Blöcken (26a-c) die zeitliche Dauer (38a-c) der Blöcke (26a-c) variiert, und/oder
- für eine Anzahl an Blöcken (26a-c) die Zeitabstände (32, 32a-c) zwischen den einzelnen Datenpaketen (20, 20a-c) im Block (26a-c) variieren,
und wobei die Blöcke (26a-c) an Datenpaketen (26) vom Empfänger (8) empfangen und dekodiert werden.

2. Verfahren nach Anspruch 1,
wobei im Mobilgerät (2) aus vom Empfänger (8) empfangenen Datenpaketen (20, 20a-c) ein zeitkontinuierliches Wiedergabesignal erzeugt wird.

3. Verfahren nach Anspruch 1 oder Anspruch 2,
wobei der Sender (12) einzelne Datenpakete (20, 20a-c) versendet, indem jeweils die digitale Information eines Datenpakets (20, 20a-c) in ein analoges Trägersignal einer fest vorgegebenen Frequenz (f1-f6) kodiert wird.

4. Verfahren nach Anspruch 3,
wobei für die Vielzahl an Datenpaketen (20, 20a-c) vom Sender (12) die Frequenzen (f1-f6) der jeweiligen analogen Trägersignale variiert werden, und
wobei der Empfänger (8) gespeicherte Informationen zur Abfolge der Frequenzen (f1-f6) der analogen Trägersignale für die Zeitabstände aufeinanderfolgender Datenpakete (20, 20a-c) heranzieht.

5. Verfahren nach einem der vorhergehenden Ansprüche,
wobei vom Sender (12) in den Datenpaketen (20, 20a-c) an deren Beginn jeweils eine Information über den Startzeitpunkt (22, 22a-c) des jeweils nachfolgenden Datenpakets (20, 20a-c) eingefügt wird.

6. Verfahren nach einem der vorhergehenden Ansprüche,
wobei die zeitliche Dauer der Datenpakete (20, 20a-c) beim Versenden im Wesentlichen gleich bleibt.

7. Sender (12), welcher dazu eingerichtet ist, eine Vielzahl an digitalen Datenpaketen (20, 20a-c) durch das Verfahren nach einem der vorhergehenden Ansprüche zu einem Mobilgerät (2) zu übertragen.

8. Mobilgerät (2), umfassend einen Empfänger (8), welches dazu eingerichtet ist, eine Vielzahl an digitalen Datenpaketen (20, 20a-c), welche nach einem Verfahren nach einem der Ansprüche 1 bis 6 übertragen werden, zu empfangen und zu dekodieren.

9. Mobilgerät (2), ausgebildet als ein Hörgerät, insbesondere Hörhilfegerät (1), umfassend einen Lautsprecher (4), welches dazu eingerichtet ist, aus der empfangenen und dekodierten Vielzahl an Datenpaketen ein Audio-Wiedergabesignal zu erzeugen und dieses über den Lautsprecher (4) wiederzugeben.
